# EUROPÄISCHE PATENTSCHRIFT

(11) **EP 0 810 148 B1**
(45) Veröffentlichungstag und Bekanntmachung des Hinweises auf die Patenterteilung: **02.01.2003**
(21) Anmeldenummer: 97108557.6
(22) Anmeldetag: 28.05.1997
(51) Int. Cl.: B62D 31/00, B62D 47/00, B60P 3/42

(54) **Kraftfahrzeug in modularer Bauweise**
Motor vehicle of modular construction
Véhicule automobile de construction modulaire

(30) Priorität: 29.05.1996 DE 19621451
(43) Veröffentlichungstag der Anmeldung: 03.12.1997
(73) Patentinhaber: ISE Innomotive Systems Europe GmbH, 51702 Bergneustadt (DE)
(72) Erfinder: Reuber, Gerhard, 57489 Drolshagen (DE); Braun, Achim, 51588 Nümbrecht (DE)
(74) Vertreter: Fuchs Mehler Weiss & Fritzsche

(56) Entgegenhaltungen:
- EP-A- 0 180 554
- EP-A- 0 250 678
- EP-A- 0 338 999
- CH-A- 295 873
- DE-A- 3 035 333
- DE-C- 873 942
- FR-A- 1 565 920
- GB-A- 885 702
- GB-A- 889 543
- GB-A- 975 220
- GB-A- 1 404 436
- US-A- 2 797 952

## Beschreibung

Die vorliegende Erfindung geht aus von einem Kraftfahrzeug in modularer Bauweise, wie es aus der FR-A-1.565.920 bekannt geworden ist.

In der Regel ist jedes Kraftfahrzeug heutzutage modular aufgebaut. Das heißt, daß bestimmte Komponenten des Fahrzeuges vom Zulieferanten komplett zusammengebaut werden, um dann als Modul zusammen mit anderen Modulen zu einem kompletten Kraftfahrzeug beim Fahrzeughersteller zusammengebaut zu werden. Der Trend geht dahin, daß vermehrt Montagearbeiten auf den Zulieferer verlagert werden, daß möglichst geringe Lagerkapazitäten bereitgestellt werden und daß mit steigender Tendenz Systemlieferanten gesucht werden. Systemlieferanten sind solche Zulieferer, die nicht nur eine Funktionskomponente, beispielsweise die Bremsanlage, liefern können, sondern die einen komplett ausgestatteten Fahrzeugbereich, beispielsweise alle Bedienungselemente für den Fahrer, herstellen, zusammenbauen und liefern können. Dabei ist es auch bekannt, Standard-Module für verschiedene Fahrzeugtypen einer Baureihe zu schaffen (EP-A-0180 554).

Die modulare Bauweise nach der zitierten FR-A-1.565.920 hat den Vorteil, daß die Heckpartie, zu welcher im wesentlichen nur elektrische Leitungen führen, als Komplettmodul beim Zulieferer hergestellt und beim Fahrzeughersteller eingebaut werden kann. Damit in der Tat nur elektrische und keine hydraulischen Leitungen in die Heckpartie führen müssen, werden die beiden Fahrzeugachsen Teil eines ersten Moduls, welcher die Frontpartie mit Motorraum, den Fahrgastraum und den Bereich der Fahrzeugachsen umfaßt. Der zweite Modul, der die Heckpartie bildet, benötigt also im Grunde nur Zuleitungen für die Fahrzeugheckbeleuchtung und gegebenenfalls für eine elektrische Betätigung des Kofferraumschlosses.

Im bekannten Fall sind die rückwärtigen Außenkotflügel dem zweiten, dem Heckpartie-Modul, zugeordnet. Wenn der erste und der zweite Modul in getrennten Werkstätten einschließlich der Außenlackierung hergestellt werden, kann es an den Seitenflächen zu Farbtonabweichungen kommen.

Damit die Außenlackierung von vorn bis hinten mit Sicherheit den gleichen Farbton erzielt und trotzdem schon eine Lackierung möglich ist, bevor die Heckpartie montiert ist, sieht die Erfindung bei einem Kraftfahrzeug in modularer Bauweise, bei der ein erster Modul die Frontpartie mit Motorraum, den Fahrgastraum und den Bereich der Fahrzeugachsen und ein zweiter Modul die Heckpartie mit Kofferraum und hinterer Stoßstange umfaßt, vor, daß an den ersten Modul hintere Außenkotflügel angeformt sind, zwischen welche der zweite Modul eingefügt ist. Dadurch können die Außenkotflügel zusammen mit der Frontpartie lackiert und Farbtonabweichungen vermieden werden.

Vorteilhafte Möglichkeiten zur Konstruktion der Verbindung zwischen erstem und zweitem Modul finden sich in den Ansprüchen 3 bis 5.

Die Aufteilung in die beiden vorgenannten Module bietet den weiteren Vorteil, daß Lagerkapazitäten insofern enorm reduziert werden können, als in einer Baureihe von Fahrzeugen, welche verschiedene Fahrzeugtypen umfaßt, die sich im wesentlichen durch die Gestaltung ihrer Heckpartie unterscheiden, lediglich ein bestimmter Satz von identischen ersten Modulen beim Fahrzeughersteller vorhanden sein muß und nicht je ein Satz der verschiedenen Fahrzeugtypen. Die jeweils gewünschte Heckpartie kann dann als zweiter Modul am ersten Modul befestigt werden.

Um die Anbringung verschiedener Heckpartien an identisch aufgebauten ersten Modulen für alle Fahrzeugtypen zu ermöglichen, sollte sich der Bereich des ersten Moduls, welcher in den Bereich des zweiten Moduls hineinragt, nach der Länge des kürzesten der vorgesehenen Fahrzeugtypen richten.

Eine ausführliche Erläuterung der Erfindung erfolgt nun anhand der Beschreibung von neun Figuren.

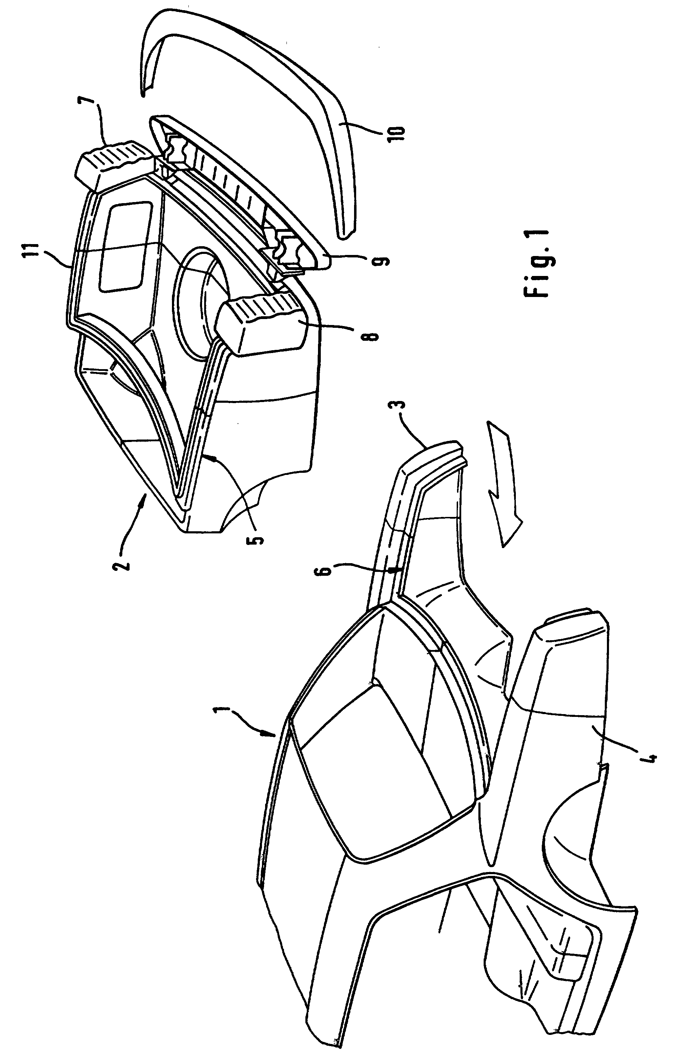

In Fig. 1 sind die zwei Module 1 und 2 eines erfindungsgemäßen Kraftfahrzeugs dargestellt. Der erste Modul umfaßt den gesamten Frontbereich sowie den Fahrgastraum inklusive Heckscheibe. In den hinteren Bereich des Fahrzeugs ragen zwei Außenkotflügel 3 und 4, zwischen welche der zweite Modul 2 von hinten und oben eingeschoben wird. An der Begrenzung des am zweiten Modul angeordneten Kofferraumes zum Außenraum hin ist eine Dichtebene 5 angelegt, welche auf einen entsprechenden Falz 6 am ersten Modul aufgelegt und mit diesem abgedichtet wird. Die am zweiten Modul angebrachten Heckleuchten 7 und 8 ragen so weit über die Seitenwände des zweiten Moduls 2 hinaus, daß sie nach Zusammenbau der beiden Module 1 und 2 zu den Außenseiten hin bündig mit den Außenkotflügeln 3 und 4 abschließen. Die dargestellte Heckstoßstange, deren Basis mit 9 und deren Abdeckung mit 10 bezeichnet ist, ist wie der größte Teil des Heckmoduls aus Blechformteilen gefertigt. Damit ergibt sich die Möglichkeit, die Stoßstange aus den Teilen 9 und 10 sowie dem übrigen Teil des zweiten Moduls 2 von ein- und demselben Zulieferanten fertigen und zusammenbauen zu lassen.

Als geeignete Verbindungsmaßnahme zwischen den beiden Modulen an der Dichtebene 5 erweist sich eine vorbereitete Klebeschicht am Falz 6, auf welcher die Dichtebene 5 punktgenau abgesetzt wird.

Die angeformten Außenkotflügel 3 und 4 am ersten Modul 1 ermöglichen eine farbgenaue Lackierung des gesamten Fahrzeuges. Verbindungen zwischen dem ersten und dem zweiten Modul sind so von außen nicht sichtbar.

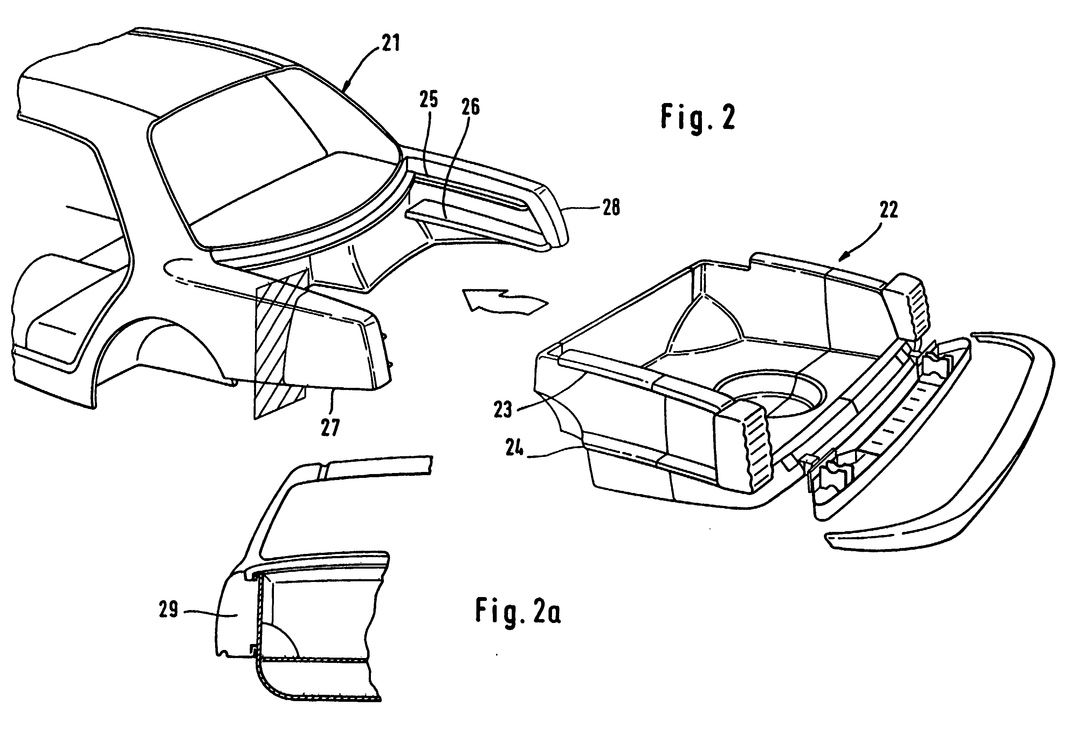

Während in der Ausführung nach Fig. 1 auf den zweiten Modul quasi ein Rahmen 11 aufgelegt ist, welcher nach unten hin die Dichtebene 5 und nach oben hin eine Kofferraumabdichtung trägt und welcher auch den oberen Kofferraumrand an der dem Fahrgastraum zugewandten Seite bildet, ist auch eine Gestaltung gemäß Fig. 2 möglich, in welcher ein derartiger Rahmen nicht vorgesehen ist. Hier sind im wesentlichen zwei Ebenen von Montageschienen in den Montageebenen 23 und 24 am zweiten Modul 22 angeformt. Entsprechende Montageebenen 25 und 26, auf welche diese Schienenpaare aufgelegt werden, befinden sich am ersten Modul 21. Auch in dieser Version steht es frei, in der oberen Montageebene 23 einen Rahmen wie in Fig. 1 aufzusetzen, so daß die Kofferraumabdichtung auf diesem Rahmen befestigt werden kann. Wie aus Fig. 2a ersichtlich, wird durch die zwei Montageebenen in unterschiedlicher Höhe von den Außenkotflügeln 27 und 28 jeweils ein geschlossener Hohlraum 29 umschlossen. In einen solchen Hohlraum 29 können beispielsweise Vorrichtungen zur Unterstützung der passiven Sicherheit des Fahrzeugs untergebracht werden.

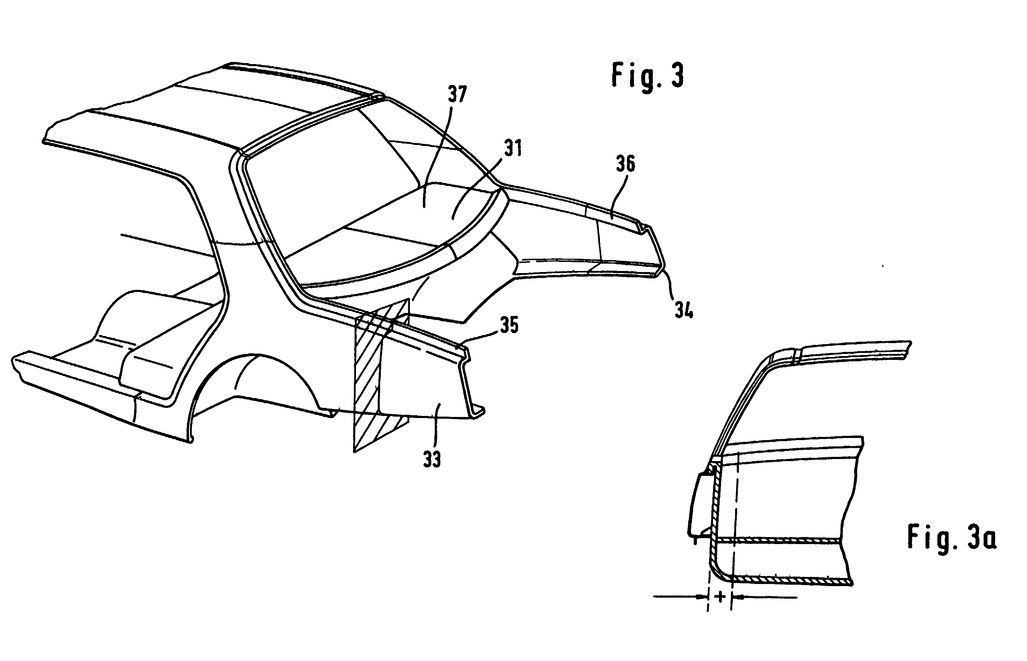

Im Unterschied zu Fig. 2 bringt eine Ausführung gemäß Fig. 3 den Vorteil einer breiteren Auslegung des Kofferraums, so daß mehr Stauraum gebildet werden kann. Bei dieser Ausführung wird der zweite Modul, welcher hier nicht dargestellt ist, in vertikale, an den Außenkotflügeln 33 und 34 des ersten Moduls 31 angeformte Schienen 35 und 36 eingehängt und an diesen befestigt. Fig. 3a zeigt die mit + bezeichnete gewonnene Kofferraumbreite auf jeder Fahrzeugseite. Die doppelte Montageund Dichtebene kann durch eine Schienenanordnung wie in Fig. 2 gezeigt, erzielt werden oder durch nachträgliches Anschweißen oder Annieten des zweiten Moduls an den ersten Modul 31 in der unteren Montageebene.

Soll ein erster Modul 31 mit einem zweiten Modul zu einem Fahrzeug mit Transporterheck, also zu einer sogenannten Kombiversion zusammengebaut werden, so wird die am ersten Modul 31 angebrachte Ablagefläche 37 entfallen.

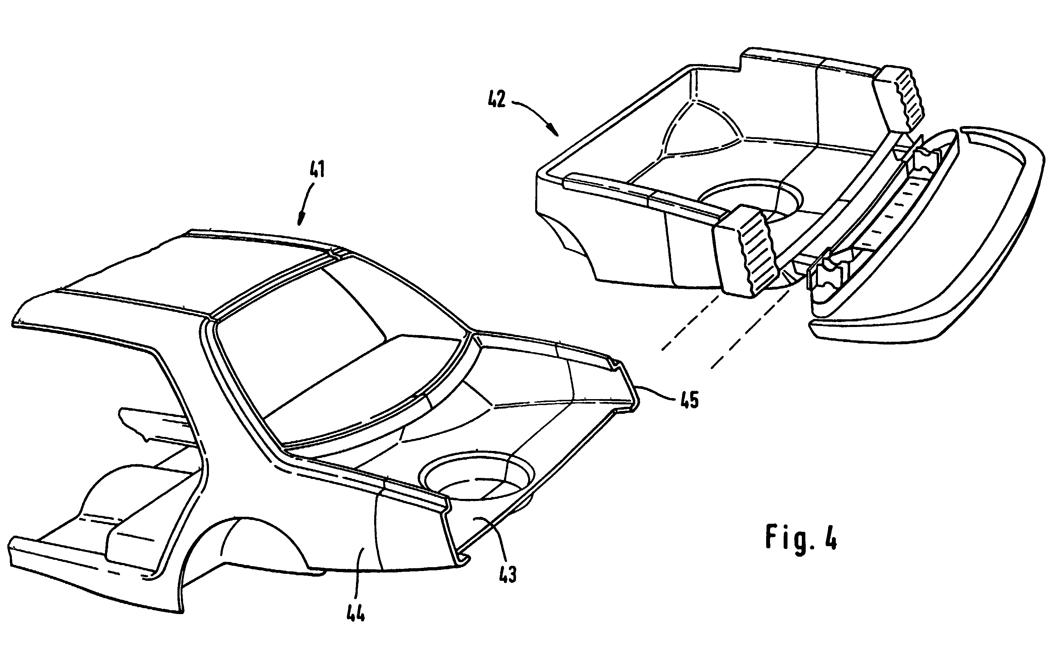

Dasselbe gilt für die Ausführung gemäß Fig. 4. Die Besonderheit bei dieser Variante ist die, daß der erste Modul 41 zusätzlich noch mit einem Bodenblech 43 ausgestattet ist, welches einen Teil der Karosserie bildet. Der Bereich von Außenkotflügeln 44, 45 und Bodenblech 43 am ersten Modul 41 ist als formstabiles, aber nicht tragendes Bauteil ausgebildet. Der zweite Modul 42 bildet demnach eine Kofferraumschale, welche als tragendes, in sich stabiles Bauteil ausgeführt ist. Dieses Bauteil wird an die tragende Karosserie am ersten Modul 41 angedockt und befestigt.

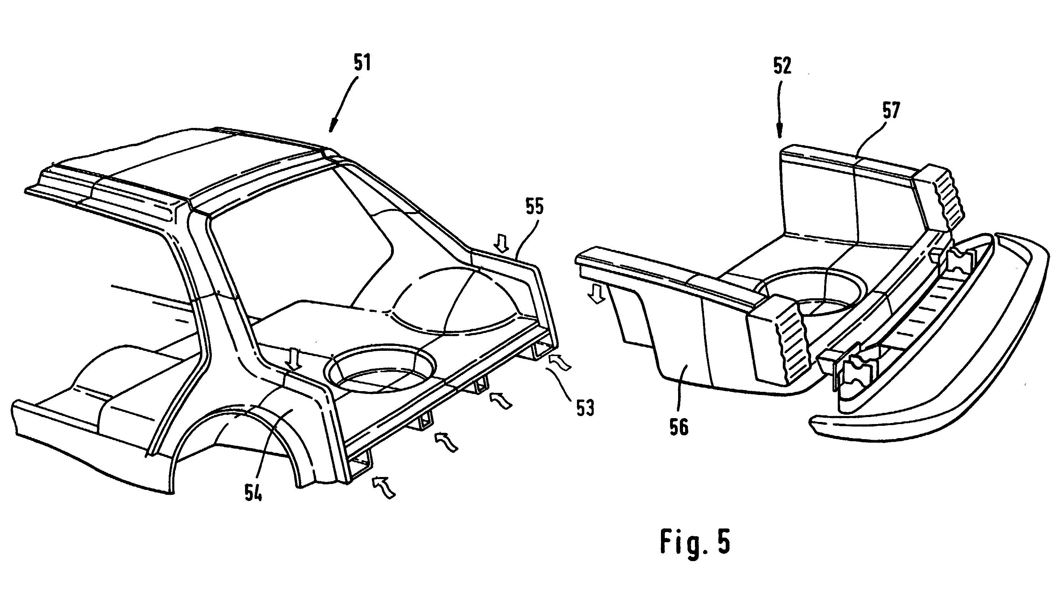

Besonders geeignet für eine Baureihe von Fahrzeugtypen, welche sich durch unterschiedliche Heckformen auszeichnen, ist die nicht erfindungsgemäße Ausführung gemäß Fig. 5. Der Karosseriegrundkörper 53 des ersten Moduls 51 ragt in den Bereich des zweiten Moduls 52 hinein, wobei allerdings keine sichtbaren Außenbleche an den Seiten angeformt sind. Die angeformten Flügel 54 und 55 sind innenliegende Bleche, welche der Versteifung dienen und von den Kotflügeln 56 und 57 des zweiten Moduls 52 bedeckt werden. Die Länge des Karosseriegrundkörpers 53 richtet sich nach der kürzesten Version der Fahrzeugtypen, welche auf diese Weise zusammengefügt werden sollen. Der zweite Modul 52, welcher hier eine Stufenheckversion darstellt, wird mit den durch Pfeile gekennzeichneten Längsholmen der tragenden Karosserie fest verbunden. Hierzu wird er zunächst auf die Flügel 54 und 55 aufgesetzt und dann von hinten aufgeschoben und mit den Längsholmen verbunden.

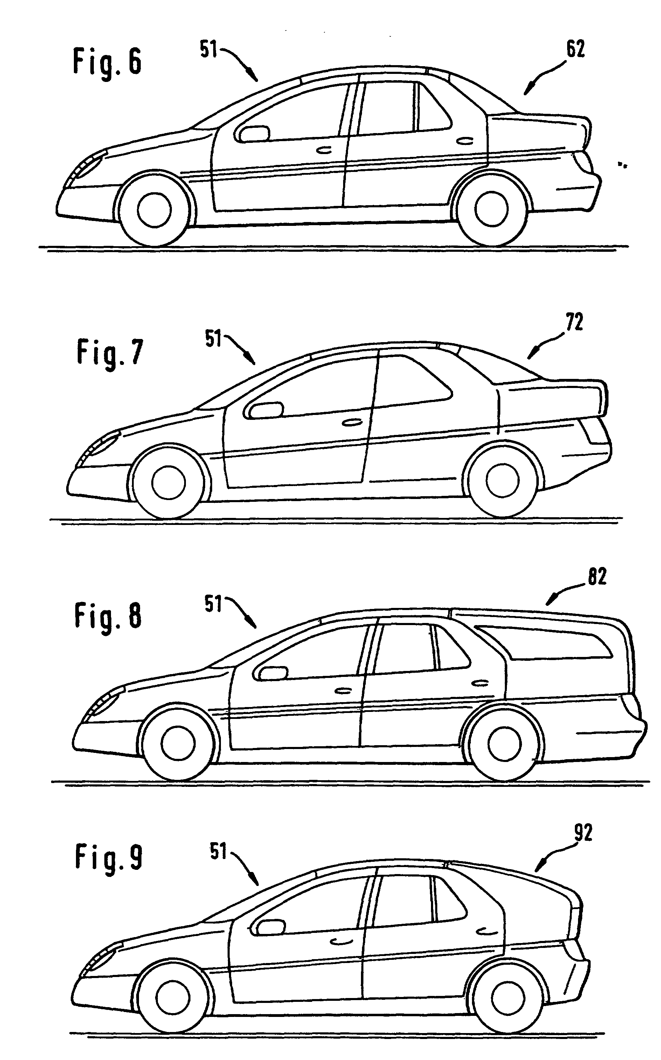

Welche Fahrzeugtypen sich auf diese Weise mit ein- und demselben ersten Modul 51 herstellen lassen, zeigen die Figuren 6 bis 9. Bestimmte Unterschiede in den einzelnen ersten Modulen 51 sind nicht fahrzeugtypbedingt, sondern eine reine Ausstattungsfrage und kommen für jeden Fahrzeugtyp gleichermaßen in Frage. Die Heckform hingegen unterscheidet sich deutlich. In Fig. 6 ist der Heckmodul, also der zweite Modul 62 als Stufenheckversion ausgebildet. Fig. 7 zeigt mit dem zweiten Modul 72 eine sogenannte Coupetversion. In Fig. 8 ist ein Transporter dargestellt, dessen zweiter Modul 82 ein Kombiheck bildet. Fig. 9 schließlich zeigt den kürzesten der dargestellten Fahrzeugtypen, nämlich einen Fünftürer, dessen zweiter Modul 92 entsprechend eine Heckklappe aufweist, die bis zur oberen Verbindungslinie zwischen erstem Modul 51 und zweitem Modul 92 reicht. Nach der Länge dieses zweiten Moduls 92 wird sich also die Länge des Karosseriegrundkörpers 53 gemäß Fig. 5 richten, wenn der erste Modul 51 für verschiedene Fahrzeugtypen herangezogen werden soll.

## Patentansprüche

1. Kraftfahrzeug in modularer Bauweise, bei der ein erster Modul (1, 21, 31, 41, 51) die Frontpartie mit Motorraum, den Fahrgastraum und den Bereich der Fahrzeugachsen und ein zweiter Modul (2, 22, 32, 42, 52, 62, 72, 82, 92) die Heckpartie mit Kofferraum und hinterer Stoßstange (9, 10) umfaßt, **dadurch gekennzeichnet, daß** an den ersten Modul (1, 21, 31, 41) hintere Außenkotflügel (3, 4; 27, 28; 33, 34; 44, 45) angeformt sind, zwischen welche der zweite Modul (2, 22, 32, 42) eingefügt ist.

2. Kraftfahrzeug nach Anspruch 1, **dadurch gekennzeichnet, daß** an den unteren Kanten der Außenkotflügel (44, 45) ein Unterboden angeformt oder befestigt ist, wobei der zweite Modul (42) in den so gebildeten Raum eingefügt ist.

3. Kraftfahrzeug nach Anspruch 1 oder 2, **dadurch gekennzeichnet, daß** der zweite Modul (42) als tragendes, in sich stabiles Teil gefertigt ist und an der tragenden Karosserie des ersten Moduls (41) befestigt ist.

4. Kraftfahrzeug nach einem der Ansprüche 1 bis 3, **dadurch gekennzeichnet, daß** am ersten Modul (51) ein hinterer Karosseriegrundkörper (53) angeformt oder befestigt ist, welcher mit Trägerteilen versehen ist, an denen der zweite Modul 52) befestigt ist.

5. Kraftfahrzeug nach einem der Ansprüche 1 bis 4, aus einer Baureihe, welche verschiedene Fahrzeugtypen umfaßt, die sich im wesentlichen durch die Gestaltung ihrer Heckpartie unterscheiden, **dadurch gekennzeichnet, daß** der erste Modul (51) für alle Fahrzeugtypen gleich aufgebaut ist.

6. Kraftfahrzeug nach Anspruch 5, **dadurch gekennzeichnet, daß** sich die Länge der in den Bereich des zweiten Moduls (52, 62, 72, 82, 92) ragenden Teile (53, 54, 55) des ersten Moduls (51) nach der Länge des kürzesten Fahrzeugtyps (92) richtet.

## Claims

1. Motor vehicle of modular construction in the case of which a first module (1, 21, 31, 41, 51) comprises the front portion with the engine compartment, the passenger compartment and the region of the vehicle axles, and a second module (2, 22, 32, 42, 52, 62, 72, 82, 92) comprises the rear portion with the boot compartment and the rear bumper (9, 10), **characterised in that** rear outer wings (3, 4; 27, 28; 33, 34; 44, 45), between which the second module (2, 22, 32, 42) is inserted, are integrally formed on the first module (1, 21, 31, 41).

2. Motor vehicle according to claim 1, **characterised in that** an underfloor is integrally formed on or secured to the lower edges of the outer wings (44, 45), the second module (42) being inserted in the space so formed.

3. Motor vehicle according to claim 1 or 2, **characterised in that** the second module (42) is manufactured in the form of an inherently stable carrying part and is secured to the carrying bodywork of the first module (41).

4. Motor vehicle according to any one of claims 1 to 3, **characterised in that** a basic rear bodywork body (53) is integrally formed on or secured to the first module (51) and is provided with carrier parts to which the second module (52) is secured.

5. Motor vehicle according to any one of claims 1 to 4, from a construction range comprising various types of vehicle which differ from one another basically in the configuration of their rear portions, **characterised in that** the first module (51) is constructed in the same manner for all types of vehicle.

6. Motor vehicle according to claim 5, **characterised in that** the length of the parts (53, 54, 55) of the first module (51) that project into the region of the second module (52, 62, 72, 82, 92) is governed by the length of the shortest type of vehicle (92).

## Revendications

1. Véhicule automobile de construction modulaire, dans lequel un premier module (1, 21, 31, 41, 51) comprend la partie avant avec le compartiment-moteur, l'habitacle et la région des essieux du véhicule, et un deuxième module (2, 22, 32, 42, 52, 62, 72, 82, 92) comprend la partie arrière avec le coffre à bagages et le pare-chocs arrière (9, 10), **caractérisé en ce que** des tôles extérieures d'ailes (3, 4 ; 27, 28 ; 33, 34 ; 44, 45), entre lesquelles est inséré le deuxième module (2, 22, 32, 42), sont formées sur le premier module (1, 21, 31, 41).

2. Véhicule automobile selon la revendication 1, **caractérisé en ce qu'**un plancher est formé sur les bords inférieurs des tôles extérieures d'ailes (44, 45), le deuxième module (42) étant inséré dans l'espace ainsi formé.

3. Véhicule automobile selon la revendication 1 ou 2, **caractérisé en ce que** le deuxième module (42) est réalisé sous forme d'élément porteur, en soi stable, et fixé sur la carrosserie porteuse du premier module (41).

4. Véhicule automobile selon l'une quelconque des revendications 1 à 3, **caractérisé en ce qu'**un corps de base de carrosserie arrière (53) est fixé ou formé sur le premier module (51), corps qui est doté de parties porteuses sur lesquelles est fixé le deuxième module (52).

5. Véhicule automobile selon l'une quelconque des revendications 1 à 4, issu d'une gamme qui comprend différents types de véhicules qui se distinguent essentiellement par la configuration de leur partie arrière, **caractérisé en ce que** le premier module (51) est de structure identique pour tous les types de véhicules.

6. Véhicule automobile selon la revendication 5, **caractérisé en ce que** la longueur des parties (53, 54, 55) du premier module (51) qui dépassent dans la région du deuxième module (52, 62, 72, 82, 92) est définie en fonction de la longueur du type de véhicule le plus court (92).
